# EUROPEAN PATENT APPLICATION

(11) **EP 3 142 239 A1**
(43) Date of publication of application: **15.03.2017**
(21) Application number: 15184238.2
(22) Date of filing: 08.09.2015
(51) Int. Cl.: H02M 1/36, H02M 7/483, H02J 3/18

(54) **PRECHARGING OF A MODULAR MULTILEVEL CONVERTER**

(71) Applicant: ABB Technology AG, 8050 Zürich (CH)
(72) Inventor: Weiss, David, 5417 Untersiggenthal (CH); Herold, Simon, 8910 Affoltern am Albis (CH)
(74) Representative: ABB Patent Attorneys

(57) **Abstract**

The present invention is concerned with simple and flexible charging of Modular Multilevel Converters (MMC). According to the invention, the MMC is charged directly from an auxiliary charging power supply, with the semiconductors of the converter cells being switched from driving power provided by auxiliary driving power supplies and starting from a dc link voltage of zero volts. The cells of a phase leg of the MMC combined with the phase leg reactor are used as a boost converter to increase a dc-link voltage of each cell such that a cumulative MMC phase leg voltage reaches the voltage required for grid connection. The charging concept includes one single charging stage starting at any MMC charging status close or equal to zero, and ending at any MMC charging status close to or fully-charged.

## Description

### FIELD OF THE INVENTION

The invention relates to the field of Modular Multilevel Converters in electric power systems, specifically to pre-charging of cell capacitors in such converters prior to operation.

### BACKGROUND OF THE INVENTION

A Modular Multilevel power Converter (MMC), also known as Chain-Link Converter (CLC), comprises a plurality of converter cells, or converter sub-modules, serially connected in converter branches, or phase legs, that in turn may be arranged in a wye/star, delta, and/or indirect converter topology. Each converter cell comprises, in the form of a half-bridge or full-bridge circuit, a capacitor for storing energy and power semiconductor switches such as insulated gate bipolar transistor (IGBT) devices, gate-turn-off thyristor (GTO) devices, integrated gate commutated thyristor (IGCT) devices, or MOSFETs for connecting the capacitor to the converter branch with one or two polarities. The nominal voltage per converter cell capacitor may be between 1 kV and 6 kV; whereas the voltage of a converter branch may be in a range from 10 kV to several 100 kV. An MMC controller with a processor and corresponding software, or a field programmable gate array (FPGA), is responsible for controlling the converter cells and operating the power semiconductor switches by means of a pulse width modulation scheme.

MMCs may be used in electric power transmission systems as ac-only Static VAR Compensators (Statcoms) and/or Flexible AC Transmission Systems (FACTS) devices for static power-factor correction as well as for voltage quality and stability purposes. A Statcom provides reactive power support to an electric power transmission network or grid to which the Statcom is connected, by producing or absorbing reactive power.

An operating MMC has a certain amount of stored energy which must be provided to the converter before seamlessly connecting the converter to the electric grid. To that purpose, charging, or pre-charging, of the converter cell capacitors is conventionally executed by using external charging controllers that require additional control hardware and thus add to the system cost, or by way of passive charging.

Passive charging of the capacitors is performed by connecting the uncharged converter with blocked pulses to the electric grid via charging resistors. The charging resistors limit the inrush current as the main breaker closes and the cell capacitors are charged to about nominal voltage by the grid voltage rectification through the freewheeling diodes of the converter. Charging the converter from the grid side via resistors does not offer a black start capability of the converter. Passive charging is slow and takes between ten seconds to several minutes to complete. Alternatively the uncharged converter can be connected to an auxiliary or charging power supply via a medium voltage step-up charging transformer. The current can be limited either by the transformer short circuit inductance, charging resistors or other current limiting devices.

WO 2012140008 discloses a passive, simultaneous or sequential cell charging of a multilevel converter through a charging resistor in the phase leg from a main AC or DC power source. No auxiliary power source is thus needed for charging the capacitors of the converter cells at start-up. Each converter cell of a converter arm is charged to a voltage that is about equal to the predetermined voltage of the DC power source divided by the number of converter cells comprised in the respective converter arm.

In MMCs operating at system voltages of tens to hundreds of kilovolts most of the semiconductor packages are on elevated voltage level and cannot be directly mounted on, or connected to, earthed components. Accordingly the auxiliary driving power that is needed to switch the semiconductors via a gate drive has to be supplied on potential.

The auxiliary energy required for operation of a semiconductor switch device of an MMC cell may be drawn from the cell capacitor of the cell dc link, provided that the latter is charged to a certain minimum voltage equal to about one quarter of a cell dc link nominal voltage. In order to achieve the minimum charging state the converter may be connected to an auxiliary power supply, preferably by means of a step-up transformer, for an initial charging through the free-wheeling diodes of the cell at least up to a certain minimum cell capacitor voltage required to start switching the semiconductor devices. Once all cells have become active, the MMC may start switching operation and actively equalize the charges in the cell capacitors using known balancing methods.

The patent US 8451636 discloses pre-charging, by means of external power electronics devices and low voltage AC power controllers providing an adjustable pre-charge current, the cell capacitors to a minimum voltage that is required for activating the semiconductors, and subsequent activation of the semiconductors such that the capacitors are charged further to nominal operating voltage.

Alternatively, the auxiliary driving power that is needed to switch the semiconductors via a gate drive may be supplied on potential by means of galvanically insulated power supplies that provide the medium voltage insulation requirements related to external power sourcing of the power semiconductor switches. The corresponding insulation task may be simplified by introducing a plane that separates high- and low-voltage parts of the power supply in so-called Inductive Power Transfer (IPT) systems. IPT designates inductive power transfer with a coupling coefficient clearly below 1, such as 0.3 or even lower. In an IPT system the magnetic flux between the windings is not guided by a core, but passes through an insulating material. The absence of a closed core offers the possibility of introducing an essentially planar electric insulation.

### DESCRIPTION OF THE INVENTION

It is an objective of the invention to provide for a simple and flexible charging of Modular Multilevel Converters (MMC). This objective is achieved by a method and a controller according to the independent claims. Preferred embodiments are evident from the dependent patent claims.

According to the invention, the MMC is charged directly from an auxiliary charging power supply, with the semiconductors of the converter cells being switched from driving power provided by auxiliary driving power supplies and starting from a dc link voltage of zero volts. The cells of a phase leg, or converter branch, of the MMC combined with the phase leg reactor are used as a boost converter to increase a dc-link voltage of each cell such that a cumulative MMC phase leg voltage reaches the voltage required for grid connection. The charging concept includes one single charging stage or regime starting at any MMC charging status close or equal to zero, and ending at any MMC charging status close or equal to fully-charged. The versatile boost concept is applicable to any number of cells per phase leg, hence a single size charging power supply with a single charging voltage output is sufficient to charge various MMCs with different numbers of cells per branch.

Specifically, a method of charging a Modular Multilevel Converter (MMC) with a plurality of converter cells each including a cell capacitor with a nominal or rated cell voltage and two power semiconductor switches controlled by, or operated through, an MMC controller comprises the following steps:

Connecting an auxiliary charging power supply with a charging voltage to a converter cell of the MMC by way of a charging circuit, or charging connection, that is devoid of a step-up transformer. The charging voltage thus supplied to the converter cell may be below a minimum dc-link voltage required for driving or operating a gate drive of the power semiconductor switches of the converter cell. The charging power supply may be an AC power source with phase terminals connected to branch terminals of a converter branch of the MMC comprising the converter cell in a series connection with a plurality of further converter cells.

Connecting an auxiliary driving power source, preferably an Inductive Power Transfer (IPT) system, to a gate drive of the converter cell to facilitate operation of the power semiconductor switches of the cell. A suitable number of auxiliary driving power sources may be connected to facilitate operation of the plurality of further converter cells of the converter branch.

Charging the cell capacitor of the converter cell to a voltage at least approximating the nominal cell voltage, by operating, through the MMC controller and by means of driving power from the auxiliary driving power sources, the power semiconductor switches of the cells of the converter branch.

In an advantageous variant of the invention the charging circuit connecting the terminals of the auxiliary power supply to branch terminals of a converter branch of the MMC comprising the converter cell in a series connection with a plurality of further converter cells as well as said converter branch are devoid of charging-specific impedances or other current limiting devices that may be switched or bypassed for charging purposes.

In an advantageous variant of the invention the auxiliary charging power supply is connected to and disconnected from the MMC via a simple disconnector switch suitable for exclusive use under no-load conditions.

In a preferred embodiment the method comprises measuring charging currents at all phases of the MMC, and implementing, or performing, a converter control as a voltage control based on the measured charging currents. Voltage control may include specifying a converter voltage reference by multiplying the measured current with a gain comparable to a pre-charge circuit impedance. In this case, a charging voltage at the MMC terminals is not needed to be known, which is specifically advantageous in the case of auxiliary power sourcing where the charging voltage is different to that of the grid and where both amplitude and phase of the charging voltage may be unknown.

The MMC may specifically be a Statcom for static power-factor correction, with converter cells being serially connected in converter branches that in turn are arranged in a wye/star or delta arrangement, and connected to a main AC grid via a single supply line.

### BRIEF DESCRIPTION OF THE DRAWINGS

The subject matter of the invention will be explained in more detail in the following text with reference to preferred exemplary embodiments which are illustrated in the attached drawings, in which identical parts are provided with the same reference symbols in the figures:
Fig.1 depicts a charging topology for a delta-connected MMC Statcom;
Fig.2 depicts a charging topology for a star-connected MMC Statcom; and
Fig.3 depicts a charging topology for a direct MMC ac-dc converter.

### DETAILED DESCRIPTION OF PREFERRED EMBODIMENTS

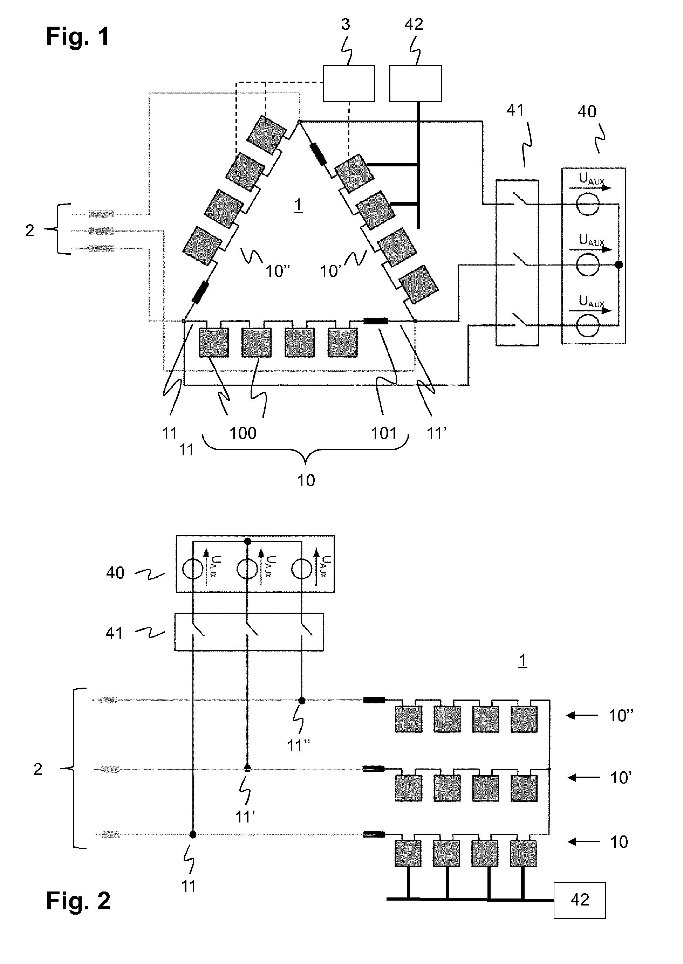

Fig.1 depicts an MMC Statcom 1 in delta configuration and connected to a three phase AC power grid 2. The MMC has three converter branches 10, 10', 10" each including four converter cells 100 and a branch reactor 101 permanently connected in series connection between two branch terminals 11, 11'. An MMC controller 3 is responsible for operating semiconductor switches of the converter cells. The branch terminals are connected to phase conductors of the AC grid and to terminals of a three-phase auxiliary charging power supply unit 40 via disconnectors 41. An auxiliary driving power source 42 is connected to a converter cell to provide driving power for switching the semiconductor switches under the control of the MMC controller 3 during a charging process.

Fig.2 depicts an MMC Statcom 1 in star topology connected to a three phase AC power grid 2. The MMC has three converter branches 10, 10', 10" each including four converter cells and a branch reactor permanently connected in series connection with a respective branch terminal 11, 11', 11". The branch terminals are connected to phase conductors of the AC grid and to terminals of a three-phase auxiliary charging power supply unit 40 via disconnectors 41. An auxiliary driving power source 42 is connected to the converter cells to provide driving power for switching the semiconductor switches under the control of an MMC controller during a charging process.

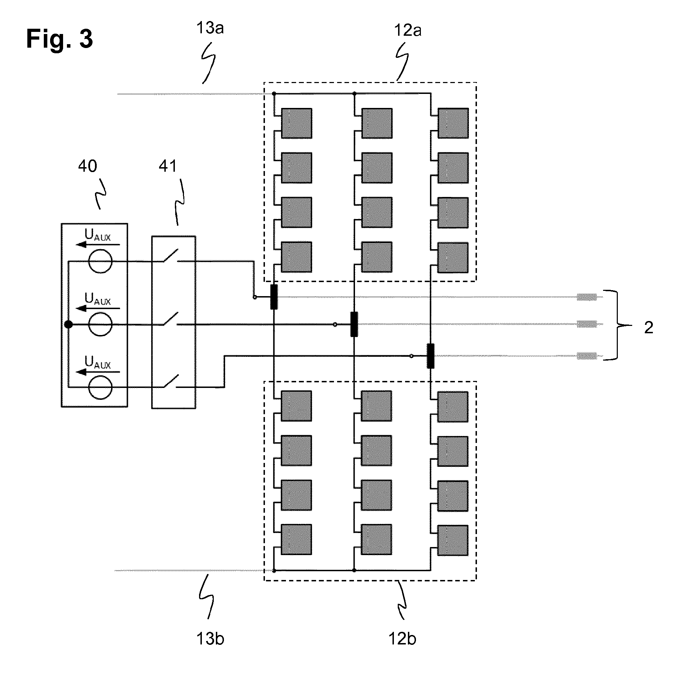

Fig.3 depicts a direct MMC ac-dc converter topology with top and bottom branches forming two parallel wye circuits 12a, 12b. A neutral point of each wye circuit is connected to a respective dc terminal 13a, 13b. Branch terminals are connected to phase conductors of the AC grid 2 and to terminals of a three-phase auxiliary charging power supply unit 40 via disconnectors 41. A contactor (not depicted) may be provided for short-circuiting the two dc terminals 13a, 13b of the MMC. Alternatively, existing grounding switches of the MMC converter may be considered for short-circuiting the dc side of the converter. The configuration of Fig.3 may be used for railway applications, but may likewise be applied to direct MMC ac-ac converters where the two terminals 13a, 13b are two-phase ac terminals.

In the foregoing examples, the charging voltage of the auxiliary charging power supply may be of the order of 400 V. With a minimum dc-link voltage required for driving or operating a gate drive of the power semiconductor switches of the converter cell being around 25% of the nominal dc link voltage, the former may be in a range of 0.25 - 1.5 kV. Hence the charging voltage supplied to an individual converter cell may be above or below the minimum dc-link voltage. The disconnector is inherently different from a circuit breaker being able to operate under load conditions.

The actively controlled pre-charge stage makes use of the converter cells to switch so as to complete pre-charging. The cells start switching and are controlled in a manner that further boosts their respective cell voltages. The control algorithm operates the converter as either a current controller or voltage controller, depending on the sensing available. If current sensing is available from the phases of the MMC, the stage two converter control is implemented as a voltage controller. Hence, and despite the MMC converter being a Voltage Source Converter VSC, by measuring the current a current sourcing system is created that produces, based on the measured line currents, a varying modulation index.

For the voltage controller the voltage reference is the measured current transformed by a controller Z, or controller function, denoted Z(I). If Z is chosen as a simple gain, also called "effective resistance" or "effective inverse admittance", then the converter acts like a resistor. Converter voltage reference is the measured current multiplied by the gain, such that the converter draws power that further boosts, or increases, cell voltage. Combined with the pre-charge circuit impedance, the converter acting as a resistor results in a current flow equivalent to that of an impedance divider. For example, if the pre-charge impedance is resistive, selecting Z to be equal to the pre-charge resistance results in perfect "impedance matching" causing maximum power flow into the converter.

Specifying Z as a gain does not require a voltage-based Phase-Locked-Loop PLL. Furthermore, the pre-charge power supply need not be perfectly balanced, such that the converter could be pre-charged from a two phase or even single-phase supply.

If pre-charge voltage sensing is available the converter is implemented as current controller, for which the current reference is the measured voltage transformed by a controller denoted Y or the inverse of Z. In case of current control, the converter current reference is voltage (representative of voltage at phases) multiplied by gain, also called "effective admittance" or "effective inverse resistance".

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of charging a Modular Multilevel Converter MMC (1) with a plurality of converter cells (100) each including a cell capacitor and power semiconductor switches, comprising
- connecting an auxiliary charging power supply (40) to a converter cell via a charging circuit devoid of a transformer;
- providing an auxiliary driving power source (42) for operating the power semiconductor switches of the converter cell,
- charging the cell capacitor of the converter cell by operating the power semiconductor switches of the converter cell with driving power from the auxiliary driving power source.

2. The method of claim 1, wherein the charging circuit and the MMC are devoid of a charging-specific impedance.

3. The method of claim 1, comprising connecting the auxiliary charging power supply to the MMC via a disconnector switch (41).

4. The method of claim 1, comprising, when operating the power semiconductor switches,
- measuring a charging current at the MMC (1),
- implementing a converter control of the MMC as a voltage control based on the measured charging current.

5. The method of any of claims 1 to 4, wherein the MMC is a Statcom for static power-factor correction.

6. An MMC controller (3) for charging a Modular Multilevel Converter MMC (1) with a plurality of converter cells each including a cell capacitor and power semiconductor switches, configured to operate the power semiconductor switches of a converter cell with driving power from an auxiliary driving power source, to charge the cell capacitor of the converter cell when connected to an auxiliary charging power supply via a charging circuit devoid of a transformer.
